# EUROPÄISCHE PATENTANMELDUNG

(11) **EP 0 844 041 A1**
(43) Veröffentlichungstag der Anmeldung: **27.05.1998**
(21) Anmeldenummer: 97112733.7
(22) Anmeldetag: 24.07.1997
(51) Int. Cl.: B23K 20/02

(54) **Verfahren zur stoffschlüssigen Verbindung von zwei Teilen**

(30) Priorität: 21.11.1996 DE 19648260; 21.11.1996 DE 19648261; 06.06.1997 DE 19723868; 12.06.1997 DE 19724899
(71) Anmelder: Seilstorfer GmbH & Co. Metallurgische Verfahrenstechnik KG, 83527 Haag-Winden (DE)
(72) Erfinder: Seilstorfer, Helmut, 81679 München (DE)
(74) Vertreter: WILHELMS, KILIAN & PARTNER Patentanwälte

(57) **Zusammenfassung**

Gegenstand der Erfindung ist ein Verfahren zur stoffschlüssigen Verbindung eines ersten und eines zweiten Teils, mit folgenden Verfahrensschritten: Herstellen des ersten Teils mit einer ersten Verbindungsfläche, an der die stoffschlüssige Verbindung hergestellt werden soll, Herstellen des zweiten Teils mit einer zu der ersten Vebindungsfläche zumindest in etwa komplementären zweiten Verbindungsfläche, Zusammenführen der beiden Teile an den Verbindungsflächen, Abdichten des stoffschlüssig zu verbindenden Bereichs durch eine längs der vollständigen Ränder der beiden Verbindungsflächen verlaufende Elektronenstrahlschweißnaht, heißisostatisches Pressen der beiden Teile zur Ausbildung der stoffschlüssigen Verbindung an den Verbindungsflächen, formgebende Fertigbearbeitung der durch heißisostatisches Pressen verbundenen Teile unter Entfernung der Elektronenstrahlschweißnaht, wobei vor dem Ausbilden der Elektronenstrahlschweißnaht und jedenfalls im Bereich der auszubildenden Elektronenschweißnaht auf wenigstens eines der beiden Teile eine Ummantelung (2) aus einem gut elektronenstrahlschweißbaren Material durch heißisostatisches Pressen aufgebracht wird.

## Beschreibung

Die Erfindung betrifft ein Verfahren zur stoffschlüssigen Verbindung eines ersten und eines zweiten Teils gemäß Oberbegriff des Patentanspruchs 1.

Ein Verfahren dieser Art ist bekannt (Ch. Nissel: "HIP Diffusion Bonding", powder metallurgy international, Band 16 (1984), Heft 3, Seiten 113 bis 116).

Mit dem Elektronenstrahlschweißen werden die Flächen, über die die beiden Teile stoffschlüssig zu verbinden sind, auf einfache Weise in ihrer Relativlage fixiert, wobei durch das Vakuum, unter dem das Elektronenstrahlschweißen stattfindet, sichergestellt ist, daß zwischen den durch heißisostatisches Fressen stoffschlüssig zu verbindenden Flächen keine Lufttaschen eingeschweißt werden.

Verbundkörper gewinnen zunehmend an Bedeutung, weil oftmals nur mit ihnen Eigenschaftsprofile erreichbar sind, die sich mit einem einheitlichen Werkstoff nicht erzielen lassen. Aus Gründen der Festigkeit des Verbunds ist vielfach, beispielsweise bei Verbundkolben für Kraftfahrzeug-Verbrennungsmotoren, eine stoffschlüssige Verbindung der zu verbindenden Teile erforderlich, die über den beim heißisostatischen Pressen ablaufenden Diffusionsschweißvorgang in hervorragender Weise erzielbar ist. Andererseits läßt das für den Verbund geforderte Eigenschaftsprofil in vielen Fällen keinen Spielraum für eine Auswahl der Werkstoffe unter dem zusätzlichen Gesichtspunkt einer guten Elektronenstrahlschweißbarkeit. Zumindest könnte das Erfordernis einer guten Elektronenstrahlschweißbarkeit zu Kompromissen bei der Werkstoffzusammensetzung zwingen, die den Werkstoff vom Optimum der eigentlichen, für seinen Einsatz wichtigen Eigenschaften entfernen.

Aufgabe der Erfindung ist es daher, ein Verfahren der eingangs genannten Art anzugeben, bei welchem die Elektronenstrahlschweißbarkeit der Werkstoffe der beiden Teile des angestrebten Verbundkörpers keinen Einfluß mehr hat.

Diese Aufgabe wird erfindungsgemäß durch ein Verfahren mit den Merkmalen des Patentanspruchs 1 gelöst.

Durch die Ummantelung aus einem gut elektronenstrahlschweißbaren Material ist sichergestellt, daß die Elektronenstrahlschweißung unabhängig von der Elektronenstrahlschweißbarkeit des ummantelten Materials durchgeführt werden kann. Durch den heißisostatischen Preßvorgang beim Ausbilden der Ummantelung ist sichergestellt, daß keine Lecks zwischen der Ummantelung und dem ummantelten Teil vorhanden sind, die der Wirkung und dem Zweck der Elektronenstrahlschweißnaht zuwiderlaufen würden.

Zur Ausbildung der Ummantelung durch heißisostatisches Pressen können entweder das zu ummantelnde Teil und die Ummantelung in eine nachfolgend evakuierte und verschlossene Kapsel verbracht und in dieser heißisostatisch gepreßt und damit verbunden werden, oder die Ummantelung selbst kann in Form einer evakuierbaren und nachfolgend verschließbaren Kapsel ausgebildet werden, die das zu ummantelnde Teil enthält.

Ein besonders bevorzugter Werkstoff für die Ummantelung ist Reinaluminium. Dies gilt insbesondere in Verbindung mit zu ummantelnden Teilen auf Aluminium- oder Magnesiumbasis und hier insbesondere in Verbindung mit den hochwarmfesten Kolbenbodenwerkstoffen gemäß den Ansprüchen 7 und 8 sowie 10 und 11. Werkstoffe auf Magnesiumbasis lassen sich schon wegen des hohen Dampfdruckes von Magnesium praktisch nicht elektronenstrahlschweißen, bei den Kolbenbodenwerkstoffen auf Aluminiumbasis nimmt die Elektronenstrahlschweißbarkeit mit zunehmendem Gehalt an Al₂O₃ oder den anderen Dispersoiden immer weiter ab.

Im folgenden werden bevorzugte Ausführungsformen der Erfindung anhand der beigefügten Zeichnung beschrieben.
Fig. 1 bis 6 zeigen Verfahrensschritte zur erfindungsgemäßen Herstellung eines Verbundkolbens auf Magnesiumbasis für einen Verbrennungsmotor,
Fig. 7 bis 9 zeigen Verfahrensschritte zur erfindungsgemäßen Herstellung einer weiteren Ausführungsform eines Verbundkolbens für Verbrennungsmotoren,
Fig. 10 bis 12 zeigen Verfahrensschritte zur erfindungsgemäßen Herstellung einer weiteren Ausführungsform eines Verbundkolbens für Verbrennungsmotoren,
Fig. 13 bis 15 zeigen Verfahrensschritte zur erfindungsgemäßen Herstellung einer weiteren Ausführungsform eines Verbundkolbens für Verbrennungsmotoren,
Fig. 16 bis 18 zeigen Darstellungen im wesentlichen entsprechend Fig. 7 mit unterschiedlich ausgebildeten Kühlkanälen im Kolbenschaftteil,
Fig. 19 ist eine der Fig. 8 im wesentlichen entsprechende Darstellung mit einem Kolbenschaftteil entsprechend Fig. 16,
Fig. 20 ist eine Darstellung des Teils aus Fig. 19 nach dem Abdrehen der Aluminiumummantelung und nach Ausbildung von Nuten für die Kolbenringe,
Fig. 21 zeigt ein Kolbenschaftteil gemäß Fig. 16 in der Draufsicht, die die Kühlmittelein- und Auslässe in den Kühlkanal erkennen läßt,
Fig. 22 bis 24 zeigen das erfindungsgemäße Verfahren zur Herstellung einer Bremsscheibe mit einem elektronenstrahlschweißbaren Innenteil und nicht elektronenschweißbaren Außenteilen,
Fig. 25 bis 27 zeigen Verfahrensschritte zur Herstellung einer Bremsscheibe, bei welcher sowohl Innenteil als auch Außenteile elektronenstrahlschweißbar sind,
Fig. 28 bis 30 zeigen Schritte des erfindungsgemäßen Verfahrens zur Herstellung einer Bremsscheibe, bei welcher sowohl das Innenteil als auch die Außenteile nicht elektronenstrahlschweißbar sind,
Fig. 31 bis 33 zeigen Schritte des erfindungsgemäßen Verfahrens zur Herstellung einer Bremsscheibe, bei welcher das Innenteil nicht elektronenstrahlschweißbar ist und die Außenteile elektronenstrahlschweißbar sind,
Fig. 34 bis 36 zeigen Verfahrensschritte zur Herstellung einer Bremsscheibe, bei welcher das Innenteil und die Außenteile so ausgebildet sind, daß zur Abdichtung der aneinander grenzenden Flächen der durch heißisostatisches Pressen zu verschweißenden Teile mehrere Elektronenstrahlschweißnähte erforderlich sind.

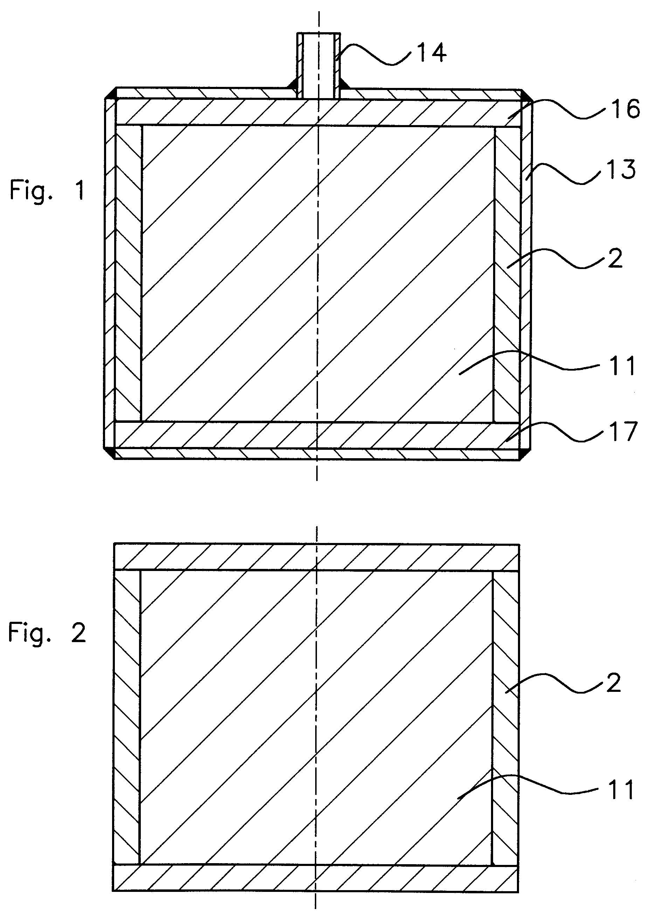

Ein Beispiel für die Herstellung eines aluminiumummantelten Vorformlings für einen Kolbenschaft auf Magnesiumbasis ist in den Fig. 1 und 2 gezeigt.

Ein zylindrischer Stab 11 aus einer Magnesiumbasislegierung in Form eines Gußteils oder eines Preßlings aus kaltisostatisch gepreßtem Pulver wird mit einer zylindrischen Ummantelung 2 aus Aluminium sowie einem Deckel 16 und einem Boden 17 aus Aluminium umgeben. Dieser Aufbau wird in eine Kapsel 13 aus Stahl eingeschweißt, die Kapsel über ein Rohr 14 evakuiert und nachfolgend verschlossen. Dieser Aufbau wird in üblicher Weise heißisostatisch gepreßt, wonach die Stahlkapsel 13 etwa durch Abdrehen entfernt wird. Der übrigbleibende Körper mit Kern 11 aus Magnesiumbasislegierung und einer Aluminiumummantelung 2 ist in Fig. 2 dargestellt. War der Magnesiumausgangskörper der oben genannte Preßling, so erfolgt bei dem heißisostatischen Aufpressen der Aluminiumummantelung gleichzeitig die Verdichtung des Magnesiumausgangskörpers auf theoretische Dichte.

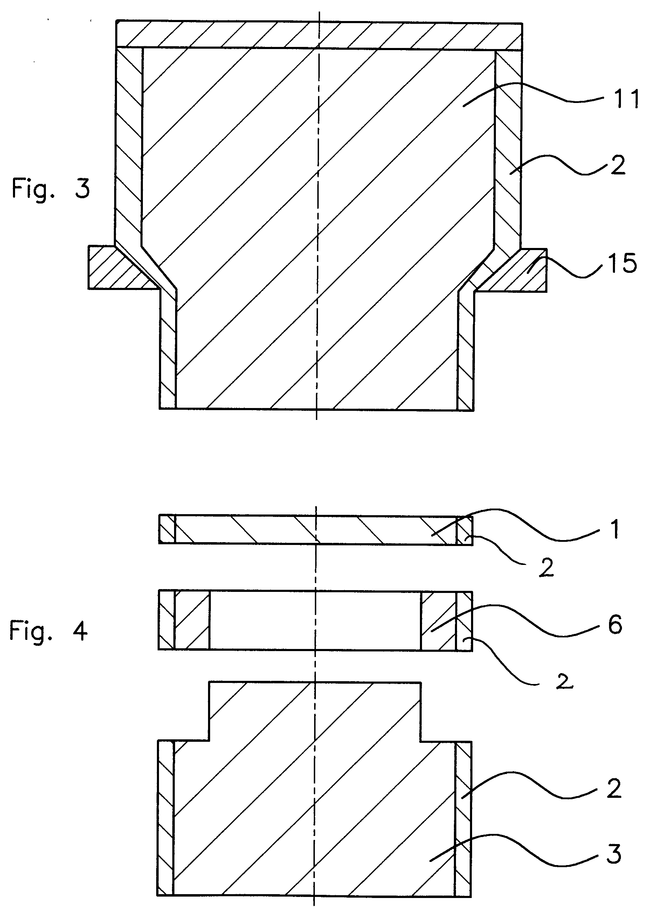

Dieser Aufbau kann, wie in Fig. 3 gezeigt, nachfolgend einem Strangpreßvorgang unterworfen werden, womit sich dann ein zylindrisches Teil mit einem Magnesiumkern 11 und einer Ummantelung 2 aus Aluminium ergibt, auf der elektronenstrahlgeschweißt werden kann.

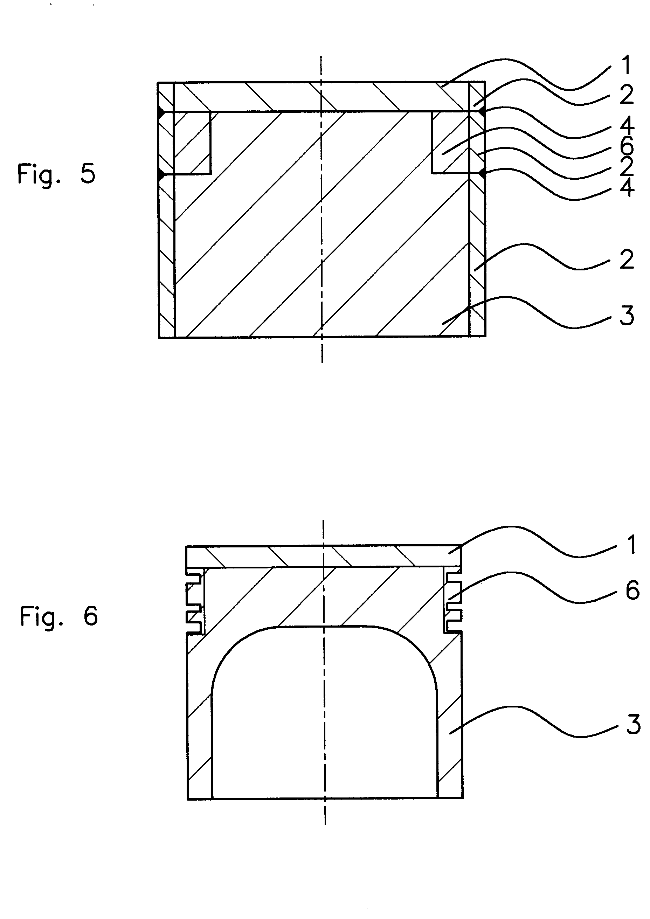

Aus dem stranggepreßten Teil wird ein Kolbenschaftvorformling 3, wie in Fig. 4 gezeigt, hergestellt. Auf dessen gestuften Abschnitt wird ein Ring 6, der ebenfalls mit einer heißisostatisch aufgepreßten Ummantelung 2 aus elektronenstrahlschweißfähigem Aluminium versehen ist, aufgesetzt. Im Ring 6 werden später, wie in Fig. 6 gezeigt, Nuten zur Aufnahme von Kolbenringen ausgebildet. Der Ring 6 muß daher aus einem härteren Material bestehen, als es der Magnesiumwerkstoff des Kolbenschaftteils 3 ist. Besonders bevorzugt sind hierfür hochwarmfeste Aluminiumwerkstoffe, wie sie weiter unten genannt sind.

Der Ring 6 wird schließlich mit einem Kolbenbodenteil 1 abgedeckt, welches ebenfalls mit einer heißisostatisch aufgepreßten Ummantelung 2 aus elektronenstrahlschweißfähigem Aluminium versehen ist.

Die drei Teile werden gemäß Fig. 5 längs Elektronenstrahlschweißnähten 4 verschweißt, wonach ein heißisostatisches Pressen erfolgt, mit dem Kolbenschaftteil 3, Kolbenringteil 6 und Kolbenbodenteil 1 stoffschlüssig verbunden werden.

Im Zuge der Fertigbearbeitung werden die Ummantelungen mit den Elektronenstrahlschweißnähten 4 entfernt, wie dies in Fig. 6 zu sehen ist.

Besonders bevorzugt besteht das Kolbenbodenteil 1 aus einem hochwarmfesten Magnesiumwerkstoff, erhalten durch mechanisches Legieren von Pulvern aus Magnesium und einem oder mehreren der Magnesium-Legierungselemente Al, Si, Zn, Cu, Ni, Ti, C, wobei die Teilchengröße des Magnesiums und der Magnesium-Legierungselemente bis etwa 100 µm beträgt und der Anteil an Legierungselementen nicht größer als 25 Gew.-% des Magnesiumanteils ausmacht, sowie von einem oder mehreren der Dispersoide oder Partikel Al₂O₃, TiC, SiO₂, SiC, YO, wobei die Teilchengröße des oder der Dispersoide oder Partikel bis etwa 50 µm beträgt und der Anteil an Dispersoiden oder Partikeln an der Gesamtmenge zwischen 5 und 30 Gew.-% beträgt, kaltes Vorpressen des Pulvergemisches und heißisostatisches Verdichten des vorgepreßten Pulvergemisches auf theoretische Dichte.

Besonders bevorzugt besteht das Kolbenbodenteil 1 ferner aus einem hochwarmfesten Magnesiumwerkstoff, insbesondere für Kolben von Verbrennungsmotoren, erhalten durch mechanisches Legieren von Pulvern aus Magnesium und Al₂O₃, wobei die Teilchengröße des Magnesiums bis etwa 50 µm und die Teilchengröße des Al₂O₃ bis etwa 20 µm und der Anteil des Al₂O₃ an der Gesamtmenge zwischen 5 und 30 Gew.-% beträgt, kaltes Vorpressen des Pulvergemisches und heißisostatisches Verdichten des vorgepreßten Pulvergemisches.

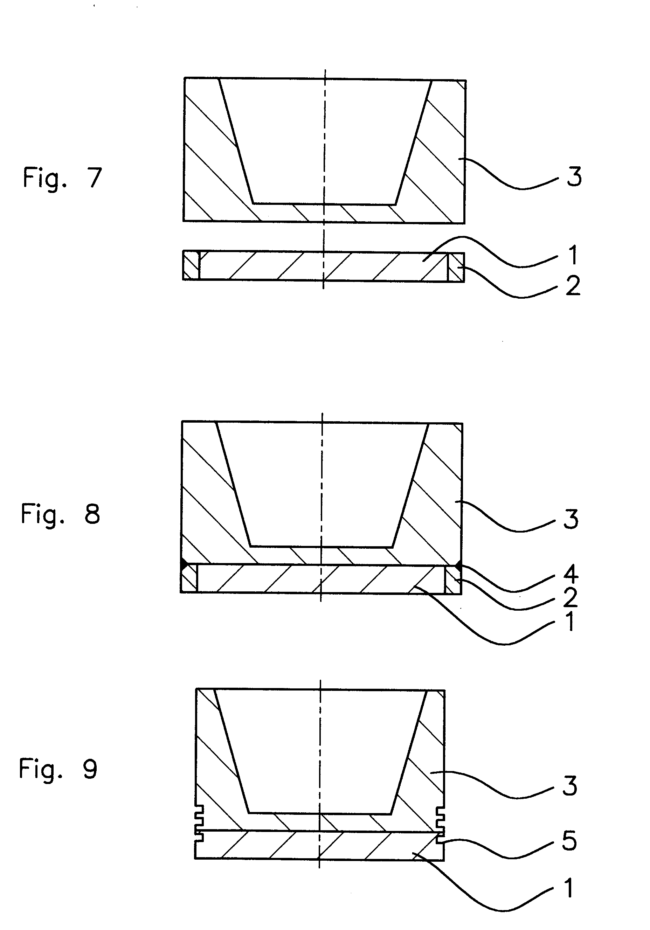

Weitere bevorzugte Ausführungsformen des erfindungsgemäßen Verfahrens zur Herstellung weiterer Ausführungsformen eines Verbundkolbens werden nun anhand der Fig. 7 bis 21 im einzelnen beschrieben.

Zunächst werden ein Rohling des Kolbenbodens 1 und ein Rohling des Kolbenschafts 3, die entsprechend dem fertigen Kolben am besten zylindrische Form haben, mit Stirnflächen hergestellt, an denen die beiden Teile aufeinandergelegt werden können.

Als Werkstoffe kommen alle Werkstoffe, die für Kolbenschaft und Kolbenboden Verwendung finden können, in Frage.

Von besonderer Bedeutung für den Kolbenschaft 3 ist eine Aluminiumgußlegierung oder auch ein Reinaluminiumguß. Es kann sich aber auch um ein Schmiedeteil oder um ein pulvermetallurgisch hergestelltes Teil handeln. Das Kolbenbodenteil kann ebenfalls eine Leichtmetallgußlegierung, mit höherer Warmfestigkeit als der Kolbenschaft, sein. Besonders bevorzugt wird jedoch ein hochwarmfester Aluminiumwerkstoff, erhalten durch mechanisches Legieren von Pulvern von Aluminium und einem oder mehreren der Aluminiumlegierungselemente Si, Mg, Zn, Cu, Ni, Ti, C, wobei die Teilchengröße des Aluminiums und der Aluminiumlegierungselemente bis etwa 100 µm beträgt und der Anteil an Legierungselementen nicht größer als 25 Gew.-% des Aluminiumanteils ist, sowie von einem oder mehreren der Dispersoide Al₂O₃, TiC, SiO₂, SiC, wobei die Teilchengröße des oder der Dispersoide bis etwa 50 µm beträgt und der Anteil an Dispersoiden an der Gesamtmenge zwischen 7,5 und 50 Gew.-% beträgt, kaltes Vorpressen des Pulvergemisches und heißisostatisches Verdichten des vorgepreßten Pulvergemisches auf theoretische Dichte.

Besonders bevorzugt ist auch ein hochwarmfester Aluminiumwerkstoff, insbesondere für Kolben von Verbrennungsmotoren, erhalten durch mechanisches Legieren von Pulvern von Aluminium und Al₂O₃, wobei die Teilchengröße des Aluminiums bis etwa 100 µm und die Teilchengröße des Al₂O₃ bis etwa 50 µm beträgt und der Anteil des Al₂O₃ an der Gesamtmenge zwischen 7,5 und 50 Gew.-% beträgt, kaltes Vorpressen des Pulvergemisches und heißisostatisches Verdichten des vorgepreßten Pulvergemischs.

Bei der Herstellung des Kolbenbodenwerkstoffs durch heißisostatisches Pressen wird das kalt vorgepreßte Pulvergemisch in eine Kapsel vorzugsweise aus Reinaluminium verbracht, die dann evakuiert und verschlossen wird, wobei die so verschlossene Kapsel mit dem darin enthaltenen Vorpreßling in einen Autoklaven verbracht wird, wo unter den üblichen Parametern die heißisostatische Verdichtung erfolgt. Der Druck liegt also zwischen 700 und 1000 bar, die Temperatur zwischen 400 und 600°C, und die Haltezeit beträgt typischerweise 4 bis 6 Stunden. Der sich auf diese Weise ergebende Körper hat theoretische Dichte. Beim Zerschneiden dieses Verbunds in Scheiben - gegebenenfalls nach einem vorhergehenden Strangpreßvorgang - entstehen in Fig. 1 und weiteren Figuren gezeigte Kolbenbodenscheiben 1, die am Rand von einer Ummantelung 2 aus dem Material der Kapsel, insbesondere also Reinaluminium, umgeben sind. Als weitere Möglichkeit der Herstellung der Aluminiumummantelung 2 kommt auch das unter Bezug auf die Fig. 1 bis 3 beschriebene Verfahren unter Verwendung einer Stahlkapsel in Betracht.

Ein Kolbenschaftvorformling 3 ist beispielsweise ein Gußteil aus Reinaluminium oder einer Aluminiumlegierung.

Die beiden Teile werden an komplementär ausgebildeten Stirnflächen zusammengefügt und längs des Umfangsrands zur Abdichtung der stoffschlüssig zu verbindenden Flächen mit einer geschlossenen Schweißnaht 4 elektronenstrahlverschweißt. Die Elektronenstrahlschweißnaht verläuft dabei bei dem schlecht elektronenstrahlschweißbaren Teil auf der Aluminiumummantelung. Die Elektronenstrahlschweißung erfolgt unter Vakuum, so daß sich innerhalb der ringförmigen Schweißnaht zwischen Kolbenboden- und Kolbenschaftteil keine Lufttaschen ausbilden können.

Das so gebildete Verbundteil wird in einen Autoklaven verbracht und dort etwa bei den gleichen Parametern heißisostatisch gepreßt, wie sie auch beim oben erwähnten heißisostatischen Pressen des Kolbenbodenteils angewandt wurden.

Bei diesem Vorgang ergibt sich durch Diffusionschweißen eine vollflächige stoffschlüssige Verbindung zwischen Kolbenboden und Kolbenschaftteil, die hervorragende Wärmeübergangseigenschaften hat, so daß es am Übergang zwischen Kolbenboden und Kolbenschaft zu keinem den Temperaturverhältnissen am Kolbenboden unzuträglichen Wärmestau kommt.

Zum heißisostatischen Pressen des elektronenstrahlverschweißten Teils muß dieses nicht nochmals gekapselt werden, es kann vielmehr, so wie es ist, mit anderen gleichartigen Teilen als Schüttgut im Autoklaven behandelt werden.

Nach dem heißisostatischen Pressen erfolgt eine Fertigbearbeitung des Verbundteils, bei dem dieses so weit abgedreht wird, daß die den Kolbenboden umgebende Ummantelung 2 mit der Elektronenstrahlschweißnaht entfallen. Gleichzeitig werden Nuten 5 (siehe z.B. Fig. 9) für die Kolbenringe ausgebildet.

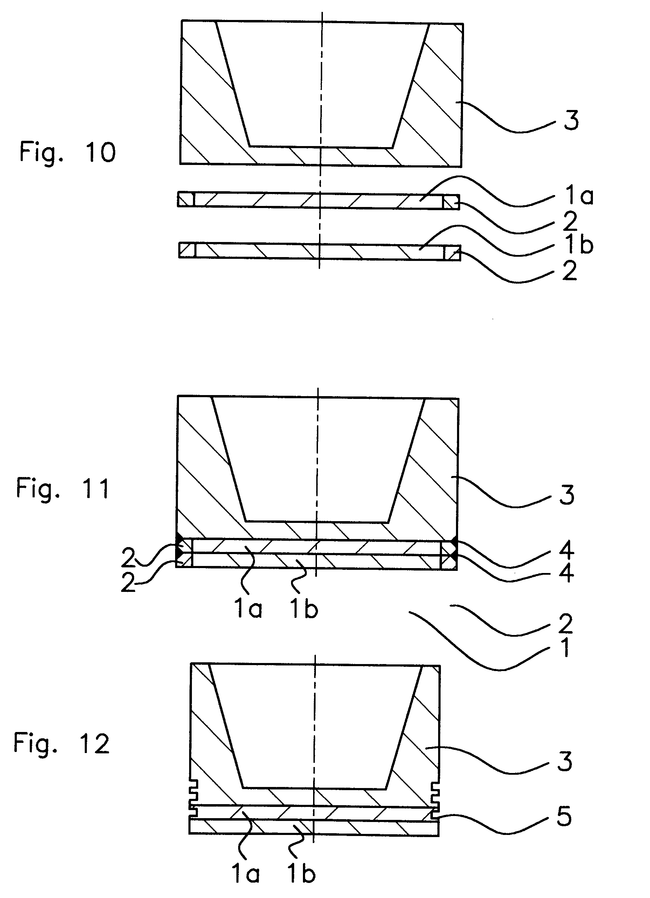

Die Fig. 10 bis 12 veranschaulichen ein Verfahren, das sich von dem anhand der Fig. 1 bis 3 veranschaulichten dadurch unterscheidet, daß zwei Kolbenbodenscheiben 1a und 1b zur Anwendung gelangen, die vor dem heißisostatischen Pressen miteinander bzw. dem Kolbenschaft längs ihrer Aluminiumummantelung 2 elektronenstrahlverschweißt werden. Diese beiden Kolbenbodenscheiben können auf die gleiche Weise wie die Kolbenbodenscheibe der ersten Ausführungsform hergestellt sein, unterscheiden sich aber in ihrer Zusammensetzung, so daß sich auf diese Weise eine Gradientenstruktur zwischen Kolbenbodenoberfläche und Kolbenschaft herstellen läßt.

Im übrigen sind die Verfahrensschritte die gleichen wie bei der ersten Ausführungsform.

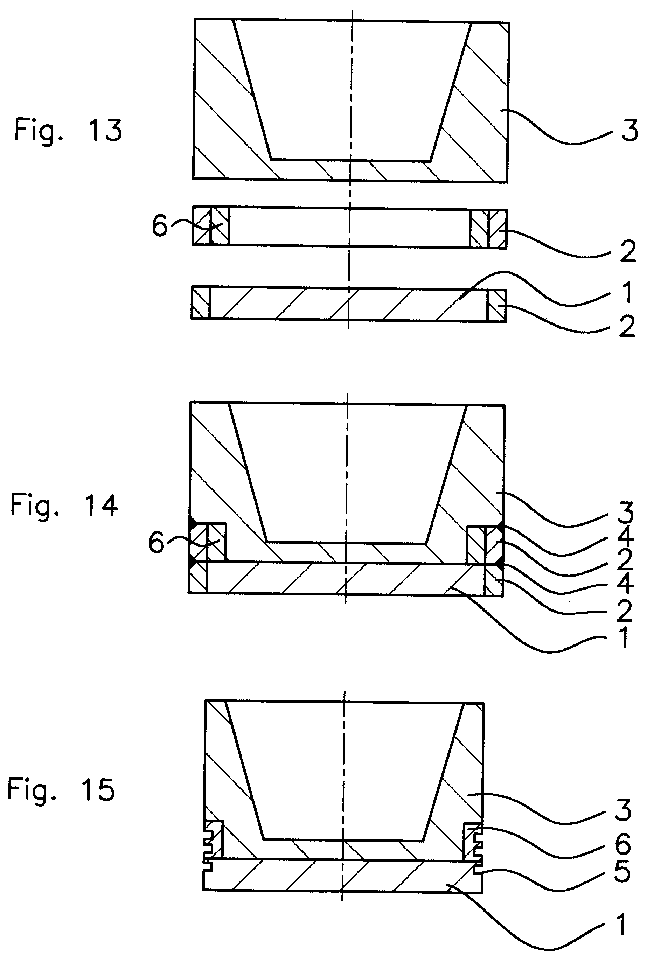

Die Fig. 13 bis 15 veranschaulichen eine Ausführungsform, bei welcher auf das Kolbenschaftteil 3, das an der Stirnfläche zurückgesetzt ausgebildet ist, ein an die Zurücksetzung angepaßtes Ringteil 6, vorzugsweise aus einem gleichen oder ähnlichen Werkstoff wie der Kolbenboden 1 und ebenfalls von einer Aluminiumummantelung 2 umgeben, aufgesetzt wird. Dies dient dazu, den Bereich des Kolbenschafts, in dem später die Kolbenringnuten 5 ausgebildet werden, mit einem besonderen Werkstoff zu versehen, der im Bereich der Kolbenringnuten verschleißmindernd wirken soll. Der oben als besonders bevorzugt für den Kolbenboden herausgestellte Werkstoff ist wegen seines hohen Dispersoidgehalts auch hier besonders geeignet.

Das Ringteil 6 wird mit dem Rest des Kolbenschaftteils 3 und dem Kolbenbodenteil 1 an den aneinandergrenzenden Rändern in abdichtender Weise längs der Ummantelung 2 elektronenstrahlverschweißt, wonach die Ummantelung 2 abgedreht wird und der Kolben mit im Ringteil 6 ausgebildeten Kolbenringnuten 5 hergestellt wird.

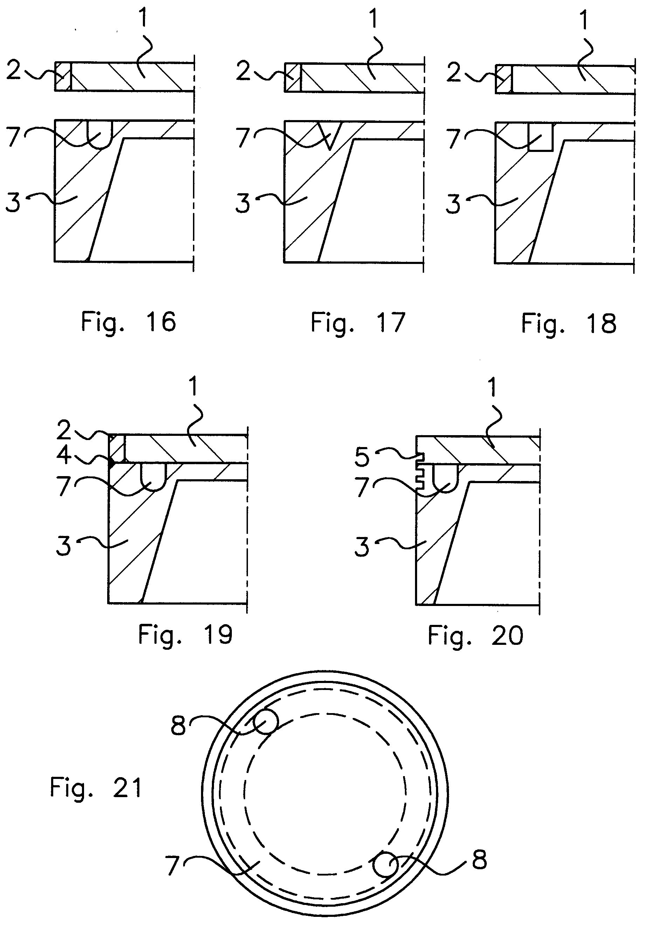

Die Fig. 16 bis 20 zeigen Ausführungsformen des Kolbenschaftes 3 mit einem Kühlkanal 7 in der an das Kolbenbodenteil 1 anschließenden Oberfläche. Die Fig. 16 bis 18 zeigen jeweils den Zustand vor dem Elektronenstrahlverschweißen von Kolbenboden 1 und Kolbenschaft 3. Fig. 20 zeigt den Verbund der Fig. 19 nach Fertigbearbeitung unter Entfernung der Ummantelung 2 und mit ausgebildeten Nuten 5 für Kolbenringe. Bei Ausbildung des Kolbenschafts 3 als Gußteil fällt der Kühlkanal 7, als oberflächlich ausgebildete Struktur, die erst durch das Kolbenbodenteil 1 abgeschlossen wird, von selbst an. Gegebenenfalls ist beim heißisostatischen Pressen des Verbunds der Druck zu reduzieren, um ein Eindrücken der Kühlkanäle zu verhindern.

Fig. 21 zeigt, wie Kühlmittelein- und -auslässe 8 in den Kühlkanal münden.

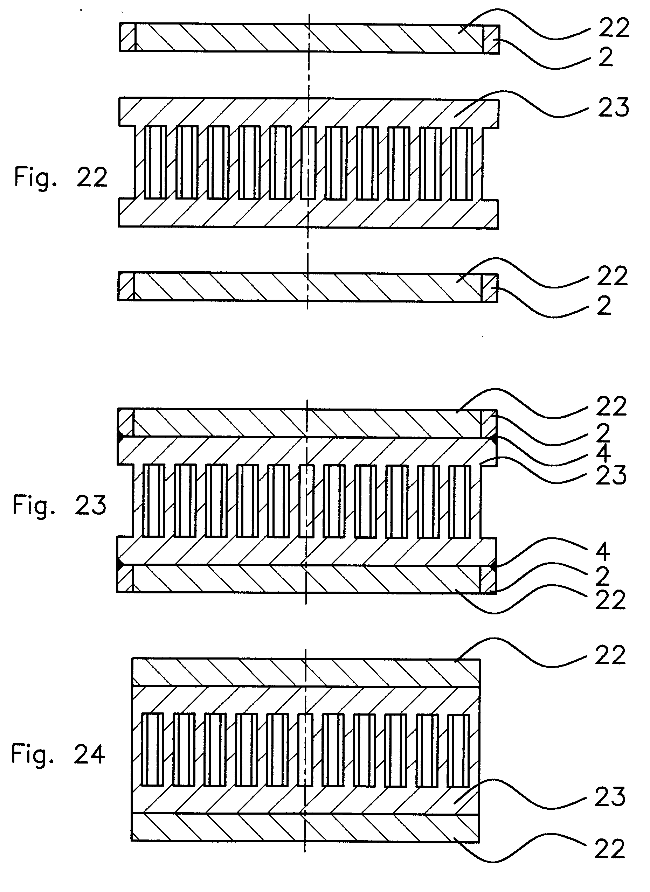

In den Fig. 22 bis 36 sind Herstellungsschritte verschiedener Ausführungsformen von Verbund-Bremsscheiben gezeigt. Die Verbund-Bremsscheiben bestehen jeweils aus einem Kern 23 geringer Masse und hoher Wärmeleitfähigkeit, etwa aus Leichtmetall, und außenseitigen Belägen 22 mit besonderer Verschleiß- und Temperaturfestigkeit bei ebenfalls guter Wärmeleitfähigkeit. Besonders geeignet sind auch hier vor allem die oben als besonders bevorzugt erwähnten hochwarmfesten Aluminiumwerkstoffe.

Die äußeren verschleißfesten Beläge 22 und der Kern 23 sind jeweils vor dem heißisostatischen Zusammenpressen elektronenstrahlzuverschweißen. Die Schweißnaht ist mit 4 bezeichnet.

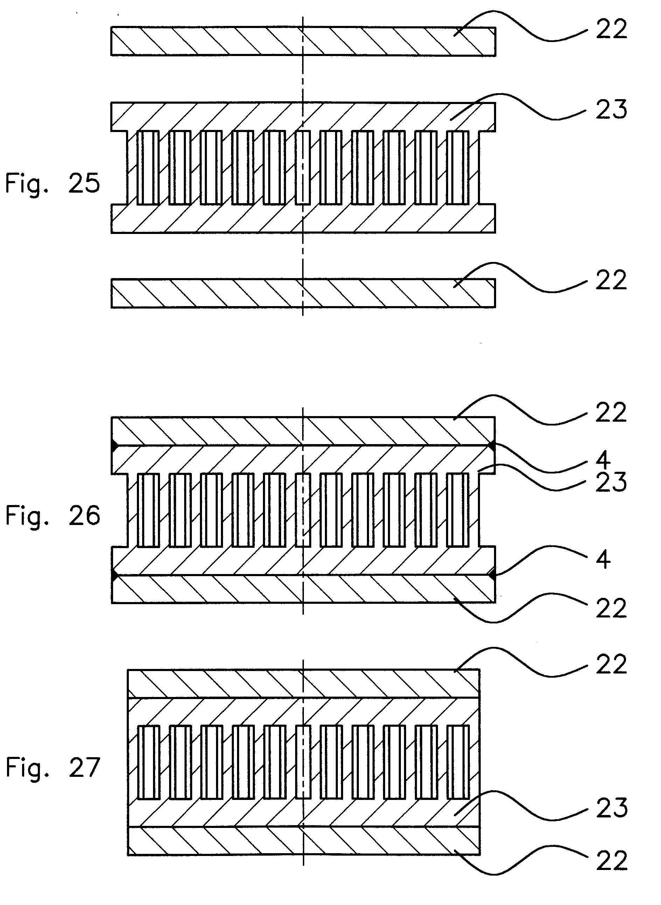

Die nicht elektronenstrahlschweißbaren Teile werden vor dem Elektronenstrahlschweißen in der erfindungsgemäßen Weise mit einer schweißfähigen Ummantelung 2 versehen werden, die nachfolgend entfernt wird bzw. werden kann. Die Fig. 22 bis 24 zeigen einen Fall, bei dem die verschleißfesten Beläge 23 nicht elektronenstrahlschweißbar sind, der Kern aber elektronenstrahlverschweißbar ist. In Fig. 24 ist der Zustand nach dem Entfernen der nur zum Schweißen vorgesehene Teile dargestellt.

Die Fig. 25 bis 27 stellen einen Fall dar, bei dem sowohl Kern als auch verschleißfester Belag elektronenstrahlschweißbar sind.

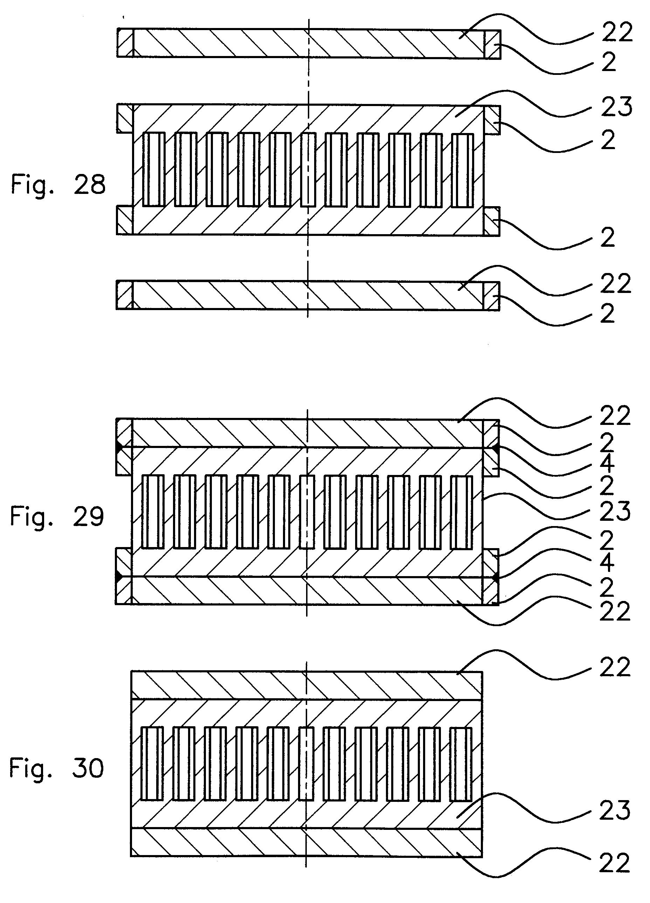

Bei der Ausführungsform der Fig. 28 bis 30 ist weder der verschleißfeste Belag 22 noch der Kern 23 elektronenstrahlverschweißbar, so daß beide eine schweißfähige Ummantelung 2 an den zu verschweißenden Stellen aufweisen.

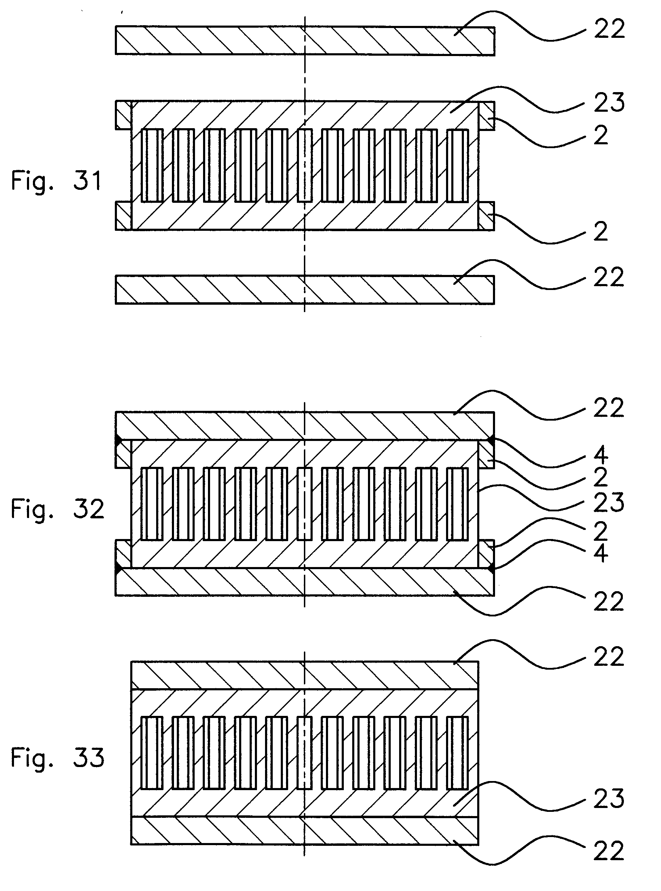

Gemäß den Fig. 31 bis 33 ist der Kern 23 nicht schweißfähig, bedarf daher einer schweißfähigen Ummantelung 2, während der verschleißfeste Belag 22 elektronenstrahlschweißfähig ist.

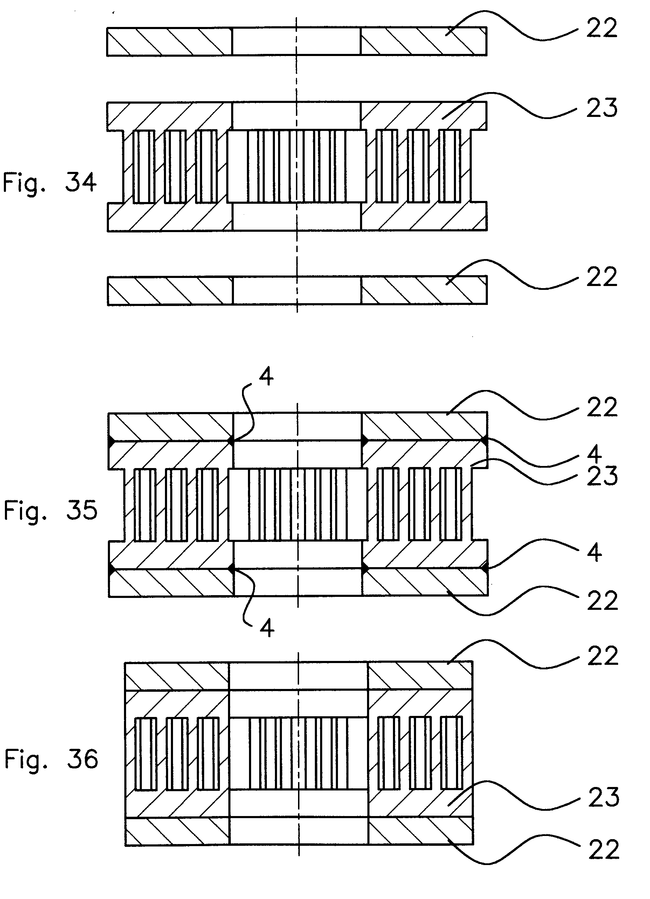

Die Fig. 34 bis 36 zeigen einen Fall, bei welchem sowohl der Kern 23 als auch der verschleißfeste Belag 22 elektronenstrahlschweißfähig ist. Das Besondere an dieser Ausführungsform ist, daß die zu verbindenden Flächen (in mathematischer Terminologie) nicht einfach zusammenhängend sind, d.h. ein Loch aufweisen, so daß jeweils zwei Schweißnähte 24 erforderlich sind, um die durch heißisostatisches Pressen stoffschlüssig zu verbindenden Flächen vollständig abzudichten. Sind bei dieser Geometrie Teile vorhanden, die nicht elektronenstrahlschweißfähig sind, so ist an ihnen jeweils innen und außen eine schweißfähige Ummantelung 2 vorzusehen.

Es sind auch Fälle mit als zwei Schweißnähten denkbar, dann muß bei einem nicht elektronenschweißfähigen Teil an allen auszubildenden Schweißnähten eine elektronenstrahlschweißfähige Ummantelung in der erfindungsgemäßen Weise vorgesehen werden.

## Patentansprüche

1. Verfahren zur stoffschlüssigen Verbindung eines ersten und eines zweiten Teils, mit folgenden Verfahrensschritten:
Herstellen des ersten Teils mit einer ersten Verbindungsfläche, an der die stoffschlüssige Verbindung hergestellt werden soll,
Herstellen des zweiten Teils mit einer zu der ersten Vebindungsfläche zumindest in etwa komplementären zweiten Verbindungsfläche,
Zusammenführen der beiden Teile an den Verbindungsflächen,
Abdichten des stoffschlüssig zu verbindenden Bereichs durch eine längs der vollständigen Ränder der beiden Verbindungsflächen verlaufende Elektronenstrahlschweißnaht,
heißisostatisches Pressen der beiden Teile zur Ausbildung der stoffschlüssigen Verbindung an den Verbindungsflächen,
formgebende Fertigbearbeitung der durch heißisostatisches Pressen verbundenen Teile unter Entfernung der Elektronenstrahlschweißnaht, dadurch gekennzeichnet,
daß vor dem Ausbilden der Elektronenstrahlschweißnaht und jedenfalls im Bereich der auszubildenden Elektronenschweißnaht auf wenigstens eines der beiden Teile eine Ummantelung (2) aus einem gut elektronenstrahlschweißbaren Material durch heißisostatisches Pressen aufgebracht wird.

2. Verfahren nach Anspruch 1, dadurch gekennzeichnet, daß das gut elektronenstrahlschweißbare Material Aluminium ist.

3. Verfahren nach Anspruch 1 oder 2, dadurch gekennzeichnet, daß die Ummantelung (2) und das Teil, auf dem die Ummantelung durch heißisostatisches Pressen aufzubringen ist, in einer geschlossenen evakuierten Stahlkapsel heißisostatisch gepreßt werden.

4. Verfahren nach Anspruch 1 oder 2, dadurch gekennzeichnet, daß die Ummantelung (2) als das Teil, auf dem die Ummantelung durch heißisostatisches Pressen aufzubringen ist, vollständig umgebende evakuierte Kapsel ausgebildet wird, die durch heißisostatisches Pressen mit dem Teil verbunden wird.

5. Verfahren nach irgendeinem der vorstehenden Ansprüche, dadurch gekennzeichnet, daß die Ummantelung (2) sowohl auf dem ersten als auch auf dem zweiten Teil aufgebracht wird.

6. Verfahren nach einem der vorstehenden Ansprüche, dadurch gekennzeichnet, daß das erste Teil ein Kolbenbodenteil (1) eines Kolbens für Verbrennungsmotoren und das zweite Teil ein Kolbenschaftteil (3) eines Kolbens für Verbrennungsmotoren ist.

7. Verfahren nach Anspruch 6, dadurch gekennzeichnet, daß das Kolbenbodenteil (1) aus einem hochwarmfesten Aluminiumwerkstoff, erhalten durch mechanisches Legieren von Pulvern von Aluminium und einem oder mehreren der Aluminiumlegierungselemente Si, Mg, Zn, Cu, Ni, Ti, C, wobei die Teilchengröße des Aluminiums und der Aluminiumlegierungselemente bis etwa 100 µm beträgt und der Anteil an Legierungselementen nicht größer als 25 Gew.-% des Aluminiumanteils ist, sowie von einem oder mehreren der Dispersoide Al₂O₃, TiC, SiO₂, SiC, wobei die Teilchengröße des oder der Dispersoide bis etwa 50 µm beträgt und der Anteil an Dispersoiden an der Gesamtmenge zwischen 7,5 und 50 Gew.-% beträgt, kaltes Vorpressen des Pulvergemisches und heißisostatisches Verdichten des vorgepreßten Pulvergemisches auf theoretische Dichte besteht.

8. Verfahren nach Anspruch 6, dadurch gekennzeichnet, daß das Kolbenbodenteil (1) aus einem hochwarmfesten Aluminiumwerkstoff, insbesondere für Kolben von Verbrennungsmotoren, erhalten durch mechanisches Legieren von Pulvern von Aluminium und Al₂O₃, wobei die Teilchengröße des Aluminiums bis etwa 100 µm und die Teilchengröße des Al₂O₃ bis etwa 50 µm beträgt und der Anteil des Al₂O₃ an der Gesamtmenge zwischen 7,5 und 50 Gew.-% beträgt, kaltes Vorpressen des Pulvergemisches und heißisostatisches Verdichten des vorgepreßten Pulvergemischs besteht.

9. Verfahren nach Anspruch 7 oer 8, dadurch gekennzeichnet, daß das Kolbenschaftteil (3) aus einer Aluminiumgußlegierung besteht.

10. Verfahren nach Anspruch 6, dadurch gekennzeichnet, daß das Kolbenbodenteil (1) aus einem hochwarmfesten Magnesiumwerkstoff, erhalten durch mechanisches Legieren von Pulvern aus Magnesium und einem oder mehreren der Magnesium-Legierungselemente Al, Si, Zn, Cu, Ni, Ti, C, wobei die Teilchengröße des Magnesiums und der Magnesium-Legierungselemente bis etwa 100 µm beträgt und der Anteil an Legierungselementen nicht größer als 25 Gew.-% des Magnesiumanteils ausmacht, sowie von einem oder mehreren der Dispersoide oder Partikel Al₂O₃, TiC, SiO₂, SiC, YO, wobei die Teilchengröße des oder der Dispersoide oder Partikel bis etwa 50 µm beträgt und der Anteil an Dispersoiden oder Partikeln an der Gesamtmenge zwischen 5 und 30 Gew.-% beträgt, kaltes Vorpressen des Pulvergemisches und heißisostatisches Verdichten des vorgepreßten Pulvergemisches auf theoretische Dichte besteht.

11. Verfahren nach Anspruch 6, dadurch gekennzeichnet, daß das Kolbenbodenteil (1) aus einem hochwarmfesten Magnesiumwerkstoff, insbesondere für Kolben von Verbrennungsmotoren, erhalten durch mechanisches Legieren von Pulvern aus Magnesium und Al₂O₃, wobei die Teilchengröße des Magnesiums bis etwa 50 µm und die Teilchengröße des Al₂O₃ bis etwa 20 µm und der Anteil des Al₂O₃ an der Gesamtmenge zwischen 5 und 30 Gew.-% beträgt, kaltes Vorpressen des Pulvergemisches und heißisostatisches Verdichten des vorgepreßten Pulvergemisches besteht.

12. Verfahren nach Anspruch 10 oder 11, dadurch gekennzeichent, daß das Kolbenschaftteil (3) aus einer Magnesiumgußlegierung besteht.

13. Verfahren nach einem der Ansprüche 1 bis 5, dadurch gekennzeichnet, daß das erste Teil ein Kernteil (23) und das zweite Teil ein Belagteil (22) einer Bremsscheibe für eine Scheibenbremse ist.

14. Verfahren nach Anspruch 13, dadurch gekennzeichnet, daß das Belagteil (22) aus einem hochwarmfesten Aluminiumwerkstoff, erhalten durch mechanisches Legieren von Pulvern von Aluminium und einem oder mehreren der Aluminiumlegierungselemente Si, Mg, Zn, Cu, Ni, Ti, C, wobei die Teilchengröße des Aluminiums und der Aluminiumlegierungselemente bis etwa 100 µm beträgt und der Anteil an Legierungselementen nicht größer als 25 Gew.-% des Aluminiumanteils ist, sowie von einem oder mehreren der Dispersoide Al₂O₃, TiC, SiO₂, SiC, wobei die Teilchengröße des oder der Dispersoide bis etwa 50 µm beträgt und der Anteil an Dispersoiden an der Gesamtmenge zwischen 7,5 und 50 Gew.-% beträgt, kaltes Vorpressen des Pulvergemisches und heißisostatisches Verdichten des vorgepreßten Pulvergemisches auf theoretische Dichte besteht.

15. Verfahren nach Anspruch 13, dadurch gekennzeichnet, daß das Belagteil (22) aus einem hochwarmfesten Aluminiumwerkstoff, insbesondere für Kolben von Verbrennungsmotoren, erhalten durch mechanisches Legieren von Pulvern von Aluminium und Al₂O₃, wobei die Teilchengröße des Aluminiums bis etwa 100 µm und die Teilchengröße des Al₂O₃ bis etwa 50 µm beträgt und der Anteil des Al₂O₃ an der Gesamtmenge zwischen 7,5 und 50 Gew.-% beträgt, kaltes Vorpressen des Pulvergemisches und heißisostatisches Verdichten des vorgepreßten Pulvergemischs besteht.
